Europäisches Patentamt

European Patent Office

Office européen des brevets

(19)

(11) Veröffentlichungsnummer: **0 129 134**
**A2**

(12) # EUROPÄISCHE PATENTANMELDUNG

(21) Anmeldenummer: **84106354.8**

(22) Anmeldetag: **04.06.84**

(51) Int. Cl.³: **G 02 B 7/26**

(30) Priorität: **15.06.83 DE 3321643**

(43) Veröffentlichungstag der Anmeldung:
**27.12.84 Patentblatt 84/52**

(84) Benannte Vertragsstaaten:
**AT BE CH DE FR GB IT LI LU NL SE**

(71) Anmelder: **Siemens Aktiengesellschaft**
**Berlin und München Wittelsbacherplatz 2**
**D-8000 München 2(DE)**

(72) Erfinder: **Krause, Dieter**
**Ravensburger Ring 65**
**D-8000 München 60(DE)**

(72) Erfinder: **Michel, Hans Jürgen, Dr.**
**Isartalstrasse 81a**
**D-8000 Müchen 70(DE)**

(54) **Steckerteil für lösbare Steckverbindungen von Lichtwellenleitern.**

(57) Die Steckerteile nach der Erfindung sollen kostengünstiger als bisher herstellbar und die Koaxialität zwischen Steckzylinder-Außendurchmesser und der Lichtwellenleiter-Faseraufnahme sehr genau sein. Dies wird mit einem Präzisionsteil für Einfach- und Mehrfach-Lichtwellenleiter-Stecker dadurch erreicht, daß in dem Steckzylinder, der getrennt gefertigt wird, anschließend selbstzentrierende galvanisch hergestellte Teile eingepreßt sind, die zum Beispiel quadratische Lichtwellenleiteraufnahmen aufweisen. Bei Steckern zum Verbinden von Mehrfachkabeln mit beliebiger Anzahl von Lichtwellenleitern sind zum Beispiel die Lichtwellenleiteraufnahmen ringförmig am Rand der Teile angeordnet und außerdem mindestens mit zwei Positionsstiften versehen.

FIG 1

EP 0 129 134 A2

SIEMENS AKTIENGESELLSCHAFT          Unser Zeichen
Berlin und München                  VPA 83 P 1410 E

Steckerteil für lösbare Steckverbindungen von Lichtwellenleitern.

Die Erfindung betrifft ein Präzisionsteil für Lichtwellenleiter-Stecker zum Verbinden von Einfach- und Mehrfachkabeln bestehend aus einem Steckzylinder mit einer Ausnehmung
für Lichtwellenleiter und Einsatz.

Zur Zeit werden Lichtwellenleiter-Einfachstecker hergestellt, deren Lichtwellenleiter-Faseraufnahme in einer
Buchse aus gut zerspanbarem Werkstoff gebohrt wird. Diese
Buchse ist in einem aus zerschleißarmen, abriebfesten
Werkstoff gefertigten Steckerteil eingepreßt
(DE-GM 81 19 993). Es werden aber auch Stecker in einem
Teil aus gut zerspanbarem Werkstoff hergestellt.

Es wurde auch bereits vorgeschlagen, Kapillarröhrchen in
Steckerteile mittels Justierdorne in einem gemeinsamen
Prisma konzentrisch zu justieren und einzukleben
(P. 33 10 973). Bei den Lichtwellenleitersteckern werden
auch die Steckzylinder nach den Faserkernen ausgerichtet
und vergossen oder nachgearbeitet.

Aus der DE-PS 28 32 303 ist eine Methode bekannt, bei der
im Steckzylinder ein Uhrenstein eingeklebt und anschließend der Steckzylinder nach der Faseraufnahme konzentrisch nachgearbeitet wird.

Der Erfindung liegt die Aufgabe zugrunde, Präzisionsteile
für Einfach- und Mehrfach-Lichtwellenleiter-Stecker
kostengünstiger als bisher herzustellen. Dabei soll vor

Wed 1 Plr/5.5.1983

0129134

allem deren Koaxialität zwischen Steckzylinder-Außendurchmesser und der Lichtwellenleiter-Faseraufnahme sehr genau
sein. Außerdem wird gefordert, daß die Durchmessertoleranzen der Steckzylinder und der Faseraufnahme ebenfalls
sehr gering sind, damit eine geringe Kopplungsdämpfung
zwischen beliebigen Lichtwellenleiter-Steckerpaarungen
erreicht wird.

Diese Aufgabe wird dadurch gelöst, daß der Einsatz aus
einem oder mehreren selbstzentrierenden galvanoplastischen
Teilen mit Lichtwellenleiter-Aufnahmen beliebiger Geometrie besteht, die in den getrennt gefertigten Steckzylinder montiert sind. Durch diese Lösung wird eine äußerst
präzise Ausführung auch bei Massenfertigungen erreicht.

Zum Herstellen von Flachteilen, für die wegen der Genauigkeitsforderungen die chemische Ätztechnik nicht mehr
ausreicht, verwendet man zumeist das Galvanoplastikverfahren. Es wird eine Glasmaske mit einseitiger Metallisierung, in die das zu erzeugende Bild eingebracht ist,
hergestellt. Dann wird ein Negativ-Resist auf die Seite
der Metallisierung aufgelegt und anschließend mit UV-
Licht belichtet. Die nicht belichteten Stellen werden
herausentwickelt und die freigelegte Metallisierung
galvanisch beschichtet, es entsteht die Galvanoplastik.
Danach wird die Galvanoplastik von der Glasmaske abgelöst
und vom Resist gereinigt. Stärke und Konturenqualität der
Galvanoplastik sind durch Höhe und Flankenqualität des
Fotoresists begrenzt. Die mögliche Feinheit und Qualität
der Resiststrukturen nimmt mit der Resiststärke ab.

Im Rahmen der Erfindung können die galvanoplastischen
Teile Lichtwellenleiter-Aufnahmen mit quadratischer,
runder oder dreieckiger Geometrie aufweisen. Durch die
frei wählbare Geometrie der Faseraufnahme kann das
Passungsspiel zwischen Faseraufnahme und Faser besonders

0129134

gering gehalten werden.

Nach einer Weiterbildung der Erfindung können die Teile mit verschiedenen Böschungswinkeln hergestellt sein. Dadurch wird das Einfädeln der Fasern wesentlich erleichtert.

Die selbstzentrierenden galvanoplastischen Teile für den Einsatz des Steckzylinders können vorzugsweise aus Kupfer oder Nickel hergestellt sein.

Nach einer weiteren Ausgestaltung der Erfindung ist der Steckzylinder aus abriebfestem Werkstoff, zum Beispiel V2A-Stahl, gefertigt und mit genauen Außen- und Innendurchmessern ausgestattet. Das hat den Vorteil, daß der Steckzylinder auch nach sehr häufigem Betätigen keinen Verschleiß zeigt.

In dem Steckzylinder aus abriebfestem Werkstoff wird der Einsatz aus galvanoplastischen Teilen zum Beispiel eingepreßt und die Glasfaser in die Aufnahme eingeklebt oder eingelötet und dieses so hergestellte Präzisionsteil an der Kopplungsseite geschliffen und poliert. Wenn die Aufnahmeform von der Faserform abweicht, kann der Kleber leichter in die Zwischenräume eindringen und dadurch eine sichere Festlegung der Glasfaser gewährleisten.

Nach einer Weiterbildung der Erfindung übernimmt der Außendurchmesser des Einsatzes die Zentrierung im Gegenstück. Durch diese Ausgestaltung werden die Glasfasern in der Kupplungsmuffe direkt über die galvanoplastischen Teile zentriert.

Nach einer Weiterbildung der Erfindung sind der oder die Teile mit radialen Laschen versehen, die in entsprechende Nuten des Steckzylinders eingreifen. Dabei ist der Laschendurchmesser größer oder gleich dem Steckzylinderdurchmesser. Diese Ausführung ermöglicht eine besonders leichte Bestückung. Durch die besondere Ausführung von Steckzylinder und Einsatz wird die geforderte Genauigkeit allein durch den Einsatz erreicht. Der Steckzylinder kann hierbei mit geringerer Genauigkeit gefertigt werden, so daß diese Ausführung besonders kostengünstig ist.

Zum Verbinden von Mehrfach-Kabeln mit einer beliebigen Anzahl von Lichtwellenleitern ist die Lichtwellenleiter-Aufnahme vorzugsweise ringförmig am Rand der Teile angeordnet. Am Umfang verteilt sind ferner mindestens zwei größere Öffnungen für Positionsstifte vorgesehen. Auf diese Weise ist es möglich, viele Fasern auf engstem Raum zu verbinden. Die anderen Steckerteile sind so gestaltet, daß der Kabelzug vom Gehäuse aufgenommen wird und die Glasfasern durch die Faserführungsschlitze einfach in den Stecker einzuführen sind.

Im Rahmen der Erfindung können die galvanoplastischen Teile auch mit eckigem Querschnitt ausgeführt sein. Ferner kann die Faseraufnahme in den galvanoplastischen Teilen beliebig angeordnet sein.

Zusammenfassend ist festzustellen, daß folgende Vorteile aus der Erfindung resultieren:

kostengünstige Massenfertigung, hohe Genauigkeit bei den galvanoplastischen Teilen,
formschlüssige Verbindung in radialer Richtung zwischen Steckzylinder und Einsatz und zwischen Faseraufnahme und Glasfaser,
optimale Gestaltung der Faseraufnahme, der -führung und der -vorzentrierung,
durch Stapeln der Einsätze größere Führungslängen für die Glasfaser als bei den gebohrten Steckern erreichbar.

Die Kopplungsdämpfung einer Lichtwellenleiter-Steckerpaarung wird durch Versatz, Oberflächenrauhigkeit und Abstand der Faserkerne stark beeinflußt. Der Versatz wird
durch die Durchmessertoleranzen der Steckzylinder, der
Faseraufnahme und der Lichtwellenleiter-Faser sowie durch
die Abweichung von der Konzentrizität zwischen Faserkern
und Steckzylinder hervorgerufen.

Die Erfindung löst nun durch die spezielle Ausführung des
Präzisionsteiles das technische Problem, zwei genaue
Zylinder koaxial in einem Teil herzustellen, in dem der
Steckzylinder getrennt gefertigt wird und anschließend
die selbstzentrierenden galvanoplastisch hergestellten
Teile in dem Steckzylinder montiert werden. Diese galvanoplastisch hergestellten Teile haben zum Beispiel
quadratische Lichtwellenleiter-Aufnahmen, wodurch das
Passungsspiel zwischen Glasfaser und Aufnahme stark reduziert werden kann. Ferner entstehen dadurch an den
Ecken große Freiräume, in denen das Bindemittel (Kleber,
Lot) leichter als bei den bekannten zylindrischen Aufnahmen eindringen kann.

Die Erfindung wird anhand der Figuren erläutert. Es
zeigen jeweils in der Vorder- und Seitenansicht im
Schnitt:

Figuren 1 und 2 einen Lichtwellenleiter-Einfachstecker mit
scheibenförmigen Einsätzen verschiedener Geometrie und

Figur 3 einen gekoppelten Lichtwellenleiter-Mehrfachstecker mit beispielsweise zwölf Faseraufnahmen
und drei Positionsstiften.

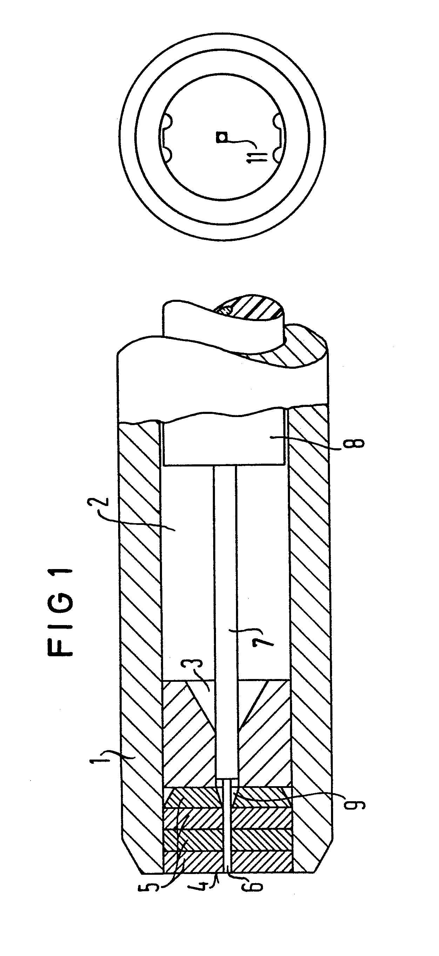

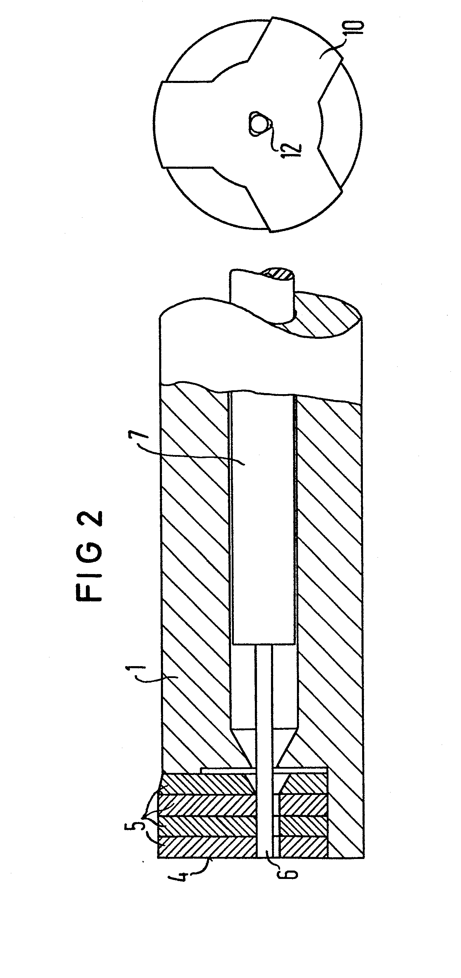

In den Figuren 1 und 2 ist der Grundkörper eines Steckerzylinders mit 1 bezeichnet, der von einer hohlzylindrischen Ausnehmung 2 durchsetzt ist, die in einen Führungskegel 3 übergeht. An der Kopplungsseite 4 ist ein Einsatz 5 in den Steckzylinder eingeschoben, der bei den dargestellten Ausführungsbeispielen jeweils aus vier galvanoplastischen Teilen besteht. In der Mitte des Steckzylinders befindet sich eine Glasfaser 6 mit ihrem "coating" 7 und der Faserhülle 8. Das Einfädeln der Glasfaser erleichtert an der inneren galvanischen Schicht des Einsatzes 5 eine Vorzentrierung über Böschungen 9. Aus der Vorderansicht dieser Figur geht hervor, daß die Faseraufnahme 11 nach diesem Ausführungsbeispiel quadratisch ist.

In der Figur 2 ist in der Vorderansicht ein galvanoplastisches Teil mit drei radialen Laschen 10 dargestellt. Die Faseraufnahme 12 ist in dieser Figur dreieckig.

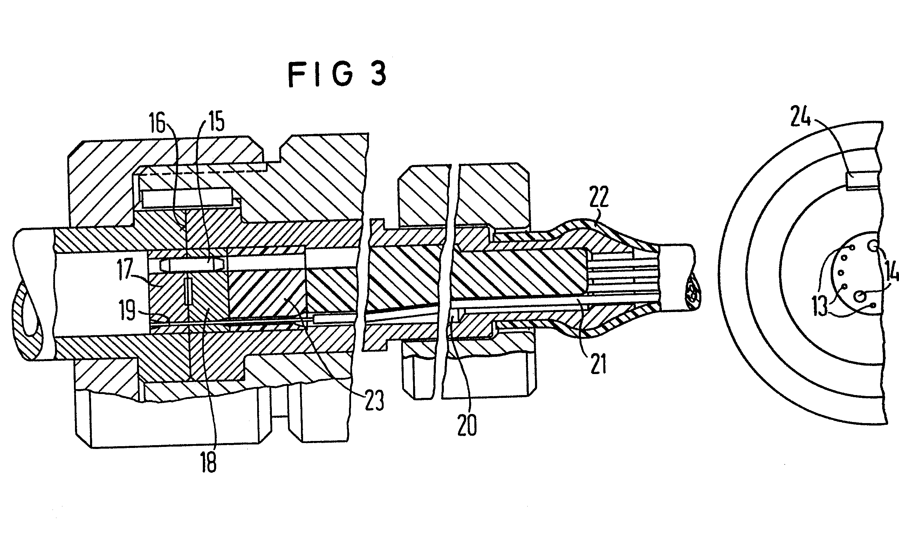

In der Figur 3 sind Faseraufnahmen 13 am Rand der galvanoplastischen Teile angeordnet. Bohrungen 14 dienen für Positionsstifte 15. Die Koppelfläche zwischen den Steckern markiert die Linie 16. 17 ist das Gegenstück, an dem das Präzisionsteil 18 anliegt. 17 und 18 sind jeweils die geschichteten galvanischen Teile. 19 zeigt eine in die Aufnahme eingeklebte Glasfaser, die durch einen Faserführungsschlitz 20 geführt ist. Der Schutz der Faser "coating" ist mit 21 und die Kabelhülle mit 22 bezeichnet. Die eingeführte Faser wird zuerst in den Führungsschlitzen und dann in einer Vorzentrierung 23 geführt, bevor sie in die Vorzentrierung der galvanoplastischen Teile eintritt. Mit 24 ist eine Verdrehsicherung angedeutet.

11 Patentansprüche
3 Figuren

Patentansprüche

1. Präzisionsteil für Lichtwellenleiter-Stecker zum Verbinden von Einfach- und Mehrfachkabeln bestehend aus einem Steckzylinder mit einer Ausnehmung für Lichtwellenleiter und Einsatz, d a d u r c h   g e k e n n -
z e i c h n e t ,   daß der Einsatz aus einer oder mehreren selbstzentrierenden galvanoplastischen Teilen (5) mit Lichtwellenleiteraufnahme (11) beliebiger Geometrie besteht, die in den getrennt gefertigten Steckzylinder montiert sind.

2. Präzisionsteil nach Anspruch 1, d a d u r c h   g e -
k e n n z e i c h n e t ,   daß die galvanoplastischen Teile (5) Lichtwellenleiter-Aufnahmen (11, 12) mit quadratischer, runder oder dreieckiger Geometrie aufweisen.

3. Präzisionsteil nach Anspruch 1, d a d u r c h   g e -
k e n n z e i c h n e t ,   daß die Teile (5) mit verschiedenen Böschungswinkeln (9) hergestellt sind.

4. Präzisionsteil nach Anspruch 1 bis 3, d a d u r c h   g e k e n n z e i c h n e t ,   daß die Teile (5) vorzugsweise aus Kupfer oder Nickel hergestellt sind.

5. Präzisionsteil nach Anspruch 1, d a d u r c h   g e -
k e n n z e i c h n e t ,   daß der Steckzylinder (1) aus abriebfestem Werkstoff, zum Beispiel V2A-Stahl, mit genauem Außen- und Innendurchmesser gefertigt ist.

6. Präzisionsteil nach Anspruch 4, d a d u r c h   g e -
k e n n z e i c h n e t ,   daß die Glasfaser (6) in die Aufnahme eingeklebt oder eingelötet ist.

7. Präzisionsteil nach Anspruch 1, d a d u r c h   g e -
k e n n z e i c h n e t ,   daß der Außendurchmesser der galvanoplastischen Teile (5) die Zentrierung übernimmt.

8. Präzisionsteil nach Anspruch 7, d a d u r c h  g e -
k e n n z e i c h n e t ,  daß der oder die Teile (5)
mit radialen Laschen (10) versehen sind, die in entsprechenden Nuten des Steckzylinders (1) eingreifen und
daß der Laschendurchmesser größer oder gleich dem Steckzylinderdurchmesser ist.

9. Präzisionsteil zum Verbinden von Mehrfach-Kabeln mit
einer beliebigen Anzahl von Lichtwellenleitern nach einem
der vorhergehenden Ansprüche, d a d u r c h  g e -
k e n n z e i c h n e t ,  daß die Lichtwellenleiter-
aufnahmen (13) vorzugsweise ringförmig am Rand der galvanoplastischen Teile angeordnet sind und daß sich ferner
gleichmäßig am Umfang verteilt mindestens zwei größere
Öffnungen (14) für Positionsstifte (15) befinden.

10. Präzisionsteil nach Anspruch 8, d a d u r c h
g e k e n n z e i c h n e t ,  daß der oder die galvanoplastischen Teile (5) mit eckigem Querschnitt ausgebildet
sind.

11. Präzisionsteil nach den Ansprüchen 8 und 9, d a -
d u r c h  g e k e n n z e i c h n e t ,  daß die
Faseraufnahmen (11, 12) beliebig angeordnet sind.

FIG 1

FIG 2

FIG 3